# EUROPEAN PATENT SPECIFICATION

(11) **EP 3 137 316 B1**
(45) Date of publication and mention of the grant of the patent: **06.06.2018**
(21) Application number: 15728136.1
(22) Date of filing: 28.04.2015
(51) Int. Cl.: B60B 35/12, B60B 35/14, B60B 35/16, B60B 11/02

(54) **DRIVING AXLE FOR OPERATING MACHINES OF MEDIUM-BIG DIMENSIONS**
ANTRIEBSACHSE ZUM BETRIEB VON MASCHINEN MIT MITTELGROSSEN BIS GROSSEN ABMESSUNGEN
ESSIEU D'ENTRAÎNEMENT POUR MACHINES D'EXPLOITATION DE MOYENNES À GRANDES DIMENSIONS

(30) Priority: 02.05.2014 IT MO20140121
(43) Date of publication of application: 08.03.2017
(73) Proprietor: OMCI S.p.A., 41013 Castelfranco Emilia (MO) (IT)
(72) Inventor: MAGNI, Giorgio, I-41121 Modena (IT)
(74) Representative: Gianelli, Luca
(86) International application number: PCT/IB2015/000582
(87) International publication number: WO 2015/166326

(56) References cited:
- WO-A1-2008/138205
- GB-A- 2 122 146
- US-A- 3 244 117

## Description

The invention refers to a driving axle, in particular of the type for self-propelled vehicles or operating machines of medium-big dimensions, such as big forklift trucks and the like, which axle has a big total length and an outline whose dimension transversal to the movement direction is bigger than the one allowed for free passage on public roads.

In particular, it can be advantageously used in those vehicles, aimed predominantly at transporting or handling big loads, so that the vehicle, or at least its driving axle, requires a width bigger than the outline allowed for free passage on public roads.

An example of such types of vehicles is constituted by vehicles intended for loading and unloading harbour facilities, for lifting and transporting big loads such as containers and the like.

Like other vehicles characterized by similar dimension features, the single vehicle can be transported on the road up to the final use destination after being disassembled in smaller transportable parts and then reassembled on site, that is in the place where the vehicle is to be used.

In the above mentioned specific case, lifting vehicles are often characterized by driving axles of great length, often longer than 4 meters. According to the prior art, disassembling these axles in smaller parts always includes the disassembly from the vehicle. These smaller parts can be transported one by one on the road, together with other parts, such as hoisting arms, etc. and particularly parts of the whole main driving axle, i.e. also the wheels, which normally consist of big twin wheels.

The subsequent re-assembly, which thus must be carried out on site, is not particularly easy, because it needs operations which are not simple to perform out of the machine workshop due to objective technical difficulties, which are due substantially to the considerable masses of the various parts involved. Handling and positioning of these parts requires particular attention and caution, especially in absence of suitable equipment.

The difficulties related to such operations executed directly on site, which require, according to the known technique, handling of the whole driving axle together with the wheels, can be considered deriving also from the fact that normally the driving axles are conceived from the very beginning, that is designed and constructed as an integral, standalone "unit" or "mechanical group" in itself of the vehicle. Therefore, the axle is a kind of "black", which carries thereinside, perfectly "registered" and tested in the machine workshop during the construction, all the systems and mechanical and hydraulic components necessary for its correct operation, and for which all the necessary mechanical and hydraulic connections are suitably provided for its assembly and disassembly in the lump to and from the machine. According to this logic, which, among other things, includes regularly as a very common and widespread practice to entrust specialized constructors with the production of complete driving axles aimed at equipping the previously mentioned vehicles and self-propelled machines, the on-road transport problem of such vehicles or self-propelled equipment might not be critical, because it is an ordinary practice to transport them disassembled "in parts". In other words, the various and countless single parts in which the vehicle has been previously disassembled, just for separate transport through suitable carriers, are then re-assembled directly at the place of final use.

Also the complete driving axles are included among these various parts, which can be transported one by one, and, once disassembled and separated from the rest of the machine, they can be transported on the road simply because every driving axle, including the wheels, is normally characterized by having only one particularly voluminous dimension: the axial length.

Therefore, the feasibility of the transport "in pieces" is, so to speak, tolerated also considering the difficult assembling operation to carry out directly at the place where the vehicle is to be used. The closest prior art document WO2008/138205 shows a driving axle of the type having a large overall length equipping self-propelled wheels vehicles which don't allow the on road passage.

It is an object of the present invention to overcome the above mentioned setbacks of the prior art by minimizing the vehicle disassembling and reassembling operations in any case necessary to allow transport on the road. Systems are known that allow a variation of the length of great self-propelled vehicle axles. These are mainly devices that use mostly telescopic structures, operated by hydraulic, mechanical or even manual systems.

However, these systems cause a certain constructive complication of the axle, which in some cases can even prejudice the performance. These systems are also relatively expensive and they can be used in a limited range of applications, such as a frequent need to transport on the road.

An advantage of the invention derives from the simplicity with which the few portions forming the invention can be disassembled and reassembled on site. Another considerable advantage offered by the invention derives from the possibility of disassembling and then reassembling the ends, with the wheels coupled thereto, in a simple and rapid way.

This is possible not only by merely "reducing" the width of the driving axle within the limits which allow transport of the machine on the road, but also, more generally, by making it possible to perform the ordinary maintenance only of the parts that need it more frequently, such as the wheels, without stopping the whole means for an unproductive off-time. In particular, this happens allowing replacement of the wheels, which are almost always twin wheels, not by stopping the machine for the whole duration of the maintenance operation, but replacing the part to be repaired with a spare part ready for use and, in the meanwhile, performing the repairing or the necessary maintenance operation in a much safer, effective and precise way in the machine workshop. For example, in order to disassemble them, the wheels must be deflated first, so as to avoid serious, even fatal accidents to the workers due to the explosion of the rim.

Besides the practical use, the divisibility of the invention in more parts provides also the advantage of facilitating the construction of the driving axle, due to the action on limited number of portions that compose the axle; these portions, with other conditions being equal, are certainly easier to be worked, handled and controlled with respect to a unique monolithic structure.

Another object of the present invention is to obtain the structure of the driving axle requiring a reduced quantity of lubricant necessary to lubricate the various parts and mechanical components thereof.

This allows the advantage of lower costs for periodical substitution of the lubricant and less environmental pollution.

Said objects and advantages are obtained by the invention as determined by the present description, including the enclosed figures, and the claims.

Further characteristics of the invention will become apparent from the following description of preferred, but not excllusive embodiment, illustrated by way of a non-limiting example, in the enclosed figures, in which:

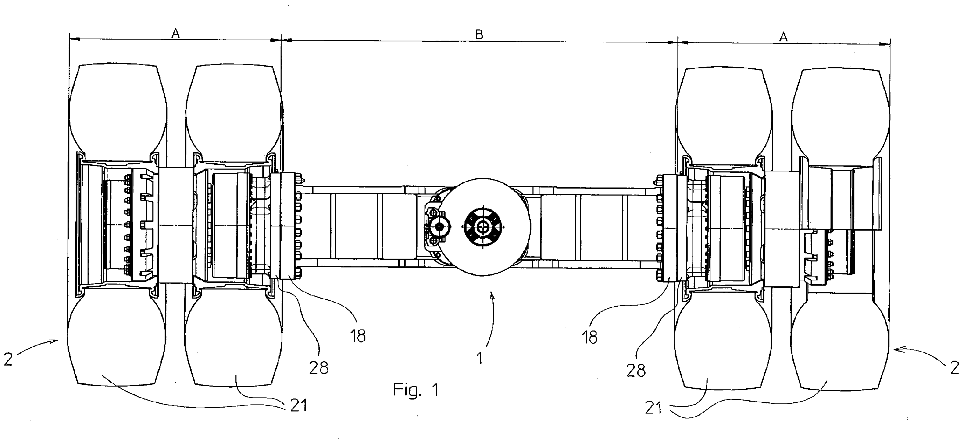

- Figure 1 is a schematic front view of the invention partially sectioned along an axial plane;

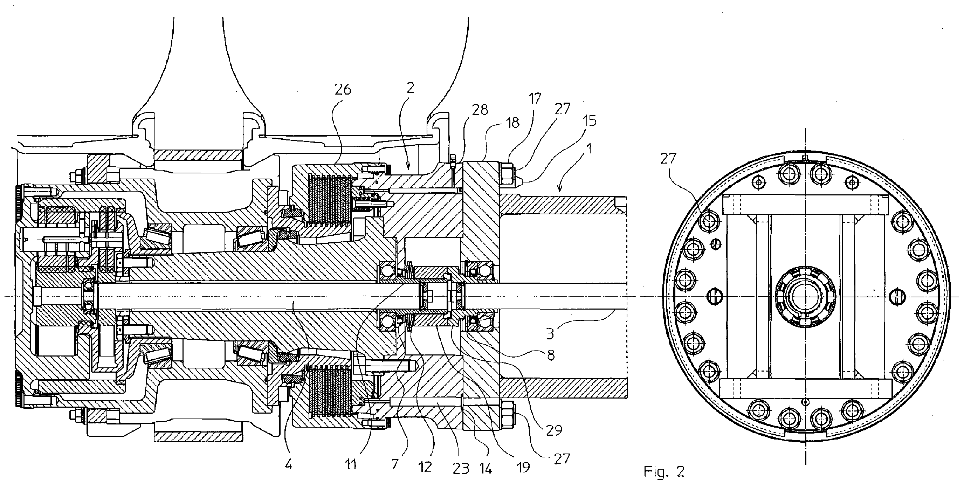

- Figure 2 shows a part of Figure 1 in enlarged scale and in axial section;

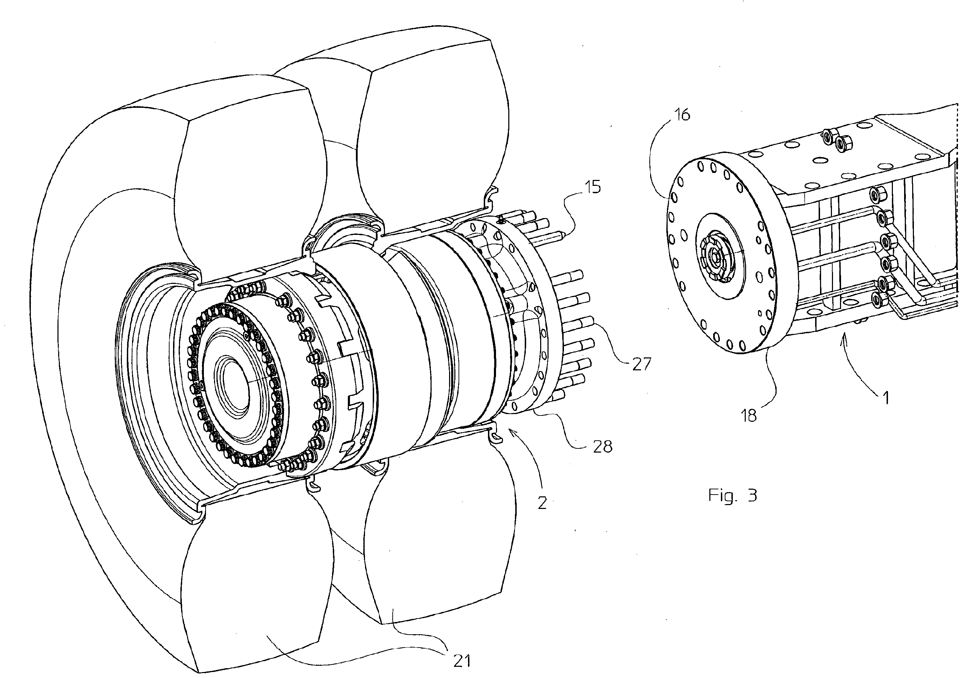

- Figure 3 shows the same part of Figure 1 in a schematic, perspective, exploded view in a different scale, likewise partially in section;
- Figure 4 shows a part of a second embodiment with steering wheels in an enlarged scale, shown in an axial section;
- Figure 5 shows the same part of Figure 4 in a different steering configuration, in a schematic, perspective view, in a different scale, likewise partially in section.

With reference to the above mentioned Figures, the reference numeral 1 indicates a central portion of a driving axle, as a whole, of the type having a great total length, since it is intended to be mounted on self-propelled operating machines of medium-big dimensions, such as big forklift trucks and the like. The driving axle is structurally composed of a plurality of portions, each of which has a total axial length smaller than a selected value, which is defined by the maximum transversal size allowed for circulation on the road.

In this case, such driving axle is realized by assembling the central portion 1 with two end portions 2. In fact, two end portions 2 are removably constrained at both sides of the central portion 1 and carry the hubs to which the twin wheels 21 are coupled.

Each of the various portions, central portion 1 and end portions 2, is designed to be coupled and uncoupled to/from the adjacent one by a mechanical connection including flanges.

In particular, each of the end portions 2 is coupled to the central portion 1 by means of an inner flange 18 and a corresponding outer flange 28, provided symmetrically at both opposite sides of the central portion 1.

The flanges are coaxial. Centring thereof is ensured by the presence of centring pins 15 which protrude externally in axial direction of the flanges 28 and which are aimed at engaging in centring seats 16 provided for this purpose in the flanges, Each flange 18 is stably fastened to the corresponding opposite flange 28 by means of stud bolts 27, which are fastened to the outer flanges 28 and engage with corresponding through holes provided in the inner flanges 18. Nuts 17 are tightened on the stud bolts.

At least one of said portions has a box-like structure and contains tightly the lubricant for lubricating the mechanical means contained therein, which are aimed at transmitting the motion.

In the illustrated embodiments the central portion 1, which houses the central differential of the driving axle, as well as both end portions 2 are structured in such a way that each of them houses the lubricant for lubricating the mechanical means contained therein and aimed at transmitting the motion. From this point of view, the central portion 1 and the end portions 2 are independent and sealed.

The flanges allow also a separation of the cooling oil circulation pipes and the auxiliary control circuits pipes.

Each of the end portions 2, which are provided with a hub supporting a pair of twin wheels 21, includes a planetary gear and a braking device 26. The braking device 26 acts on the wheels 21 and is supplied by a supply line, which is divided in an inner duct length 23, provided on the inner flange 18 of the central portion 1, and a corresponding outer duct length 13, provided on the outer flange 2. A fixed sealing gasket of the "O ring" type provides the necessary hydraulic seal between the facing ends of the inner duct length 23 and of the outer duct length 13.

An outer half-shaft 4 is aimed at transmitting the rotation movement to the twin wheels 21 by means of a planetary gear.

Stable fastening of each flange 18 with the corresponding opposite flange 28 by means of stud bolts 27, which are coupled and tightened with nuts 17, allows mounting or firmly coupling each end portion 2 to the corresponding opposite central portion 1, restoring the hydraulic connections necessary for the operation of the driving axle.

The mechanical connections are automatically established by simply connecting the flanges.

In fact, in this step, alignment and contact are restored between each outer half-shaft of each end portion 2 and one of the two inner half-shafts 3 of the central differential, not shown in detail, which is housed in the central portion 1. The outer half-shaft 4 has an end, the one situated near the end flange 28, geared for rotational mechanical connection to the corresponding end of an inner half-shaft 3 of the central portion 1, which is situated near the inner flange 18.

This mechanical rotational connection is obtained by means of a sliding joint 10 in an automatic way subsequently or concurrently with the connection of the flanges.

For this purpose, the sliding joint 10 includes an outer half-joint 19, which slides freely in axial direction on an outer sleeve 11 and is provided with an outer toothing aimed at coupling with a corresponding toothing of an inner half-joint 29 provided integral with an inner end of the inner half-shaft 3, which is opposite to the outer toothing of the inner half-joint 29.

The automatic connection that locks the elements for rotation occurs through the engagement of the two toothings, which is obtained and kept through the action of axial springs 12 of bucket type, which act axially on the sleeve 11 to push and keep pushed the outer half-joint 19 against the inner half-joint 29, when the joint has been fitted.

The engagement is thus carried out, in an automatic way, once the flanges have been connected, after that perfect alignment has been obtained between the outer toothing of the outer sleeve 11 and the inner toothing of the inner sleeve 29.

The type of the automatic engagement or connection herein described obviously allows also a simple and easy uncoupling of the mechanical connection between the outer half-shaft 4 and the inner half-shaft 3.

Likewise, the hydraulic disconnection during the disconnection of the outer flange 28 from the inner flange 18 is rapid and simple.

The rotating hydraulic seals 7 and 8 on the outer sleeve 11 of the end portion 2 and on the inner half-joint 29 of the central portion 1, respectively, keep the lubricants of the related mechanical parts isolated and sealed in the respective portions. This reduces the total quantity of lubricant necessary for the whole axle and allows rapid and simple disassembly thereof into a central portion and, in the illustrated embodiments, in two end portions with the minimum waste or loss of lubricant. Consequently, this also reduces, with respect to the prior art, the environmental impact due to the loss and the replacement of the oil and the relative disposal costs.

In the first illustrated embodiment, the division of the driving axle is made in such a way that the axial lengths of the various portions, indicated respectively with B for the central portion and with A for the lateral portions - the latter are identical and disposed symmetrically - remain all within the dimension limits for the road transport.

According to an embodiment not shown in the enclosed figures, a driving axle according to the invention can be composed of a plurality of portions constituted by a so-called central portion and an end portion 2. The latter end portion 2 can be mechanically coupled and uncoupled, in a coaxial relation, by means of its outer flange 28 with a corresponding inner flange 18 provided at the side of the central portion 1. Also in this case the total length of the end portion and that of the central portion remain within the limits previously indicated in the present description.

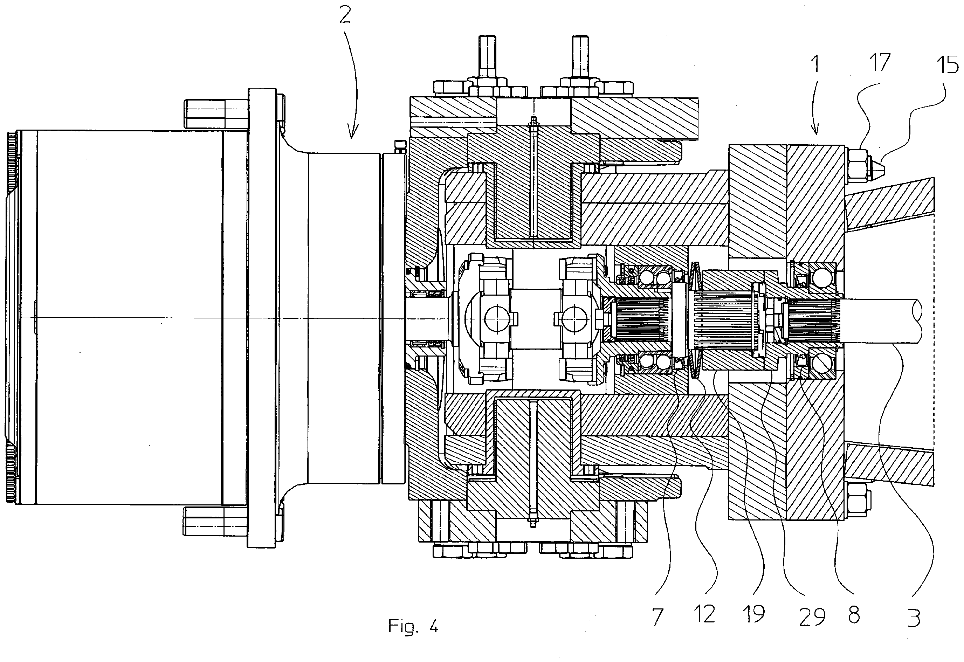

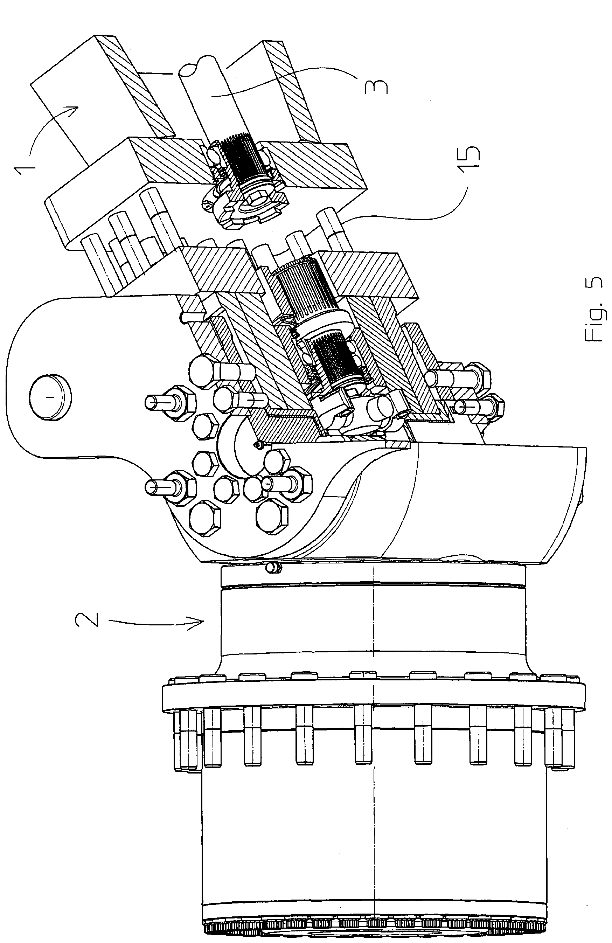

The embodiment illustrated in Figures 4 and 5 shows the application of the invention to a steering axle.

According to the invention, once the end portions 2 have been disconnected from the central portion 1, disassembly of the latter from the operating machine can be avoided and the latter can be transported on the road, though with suitable vehicles.

A further advantageous characteristic of the invention derives also from the fact that the disassembly of the end portions 2 not only allows transport of the operating machine, but also makes it possible to carry out all the necessary maintenance and replacement operations of the same end portions and in particular of the wheels 21 in the machine workshop, instead of on the work site, with undoubted efficiency and safety advantages.

## Claims

1. A driving axle of the type having a large overall length and aimed at being mounted on self-propelled operating machines of medium-big dimensions, such as big forklift trucks and the like, defining an outline whose transversal dimension is bigger than the one allowed for free passage on public roads, being structurally made of a plurality of portions, each of which has the overall axial length shorter than a prefixed value; **characterized in that** each of said central portions (1) and terminal portions (2) can be coupled and uncoupled to/from the adjacent one by a mechanical connection with inner (18) and outer (28) flanges and **in that** at least one of said portions has a box-like leakproof structure containing at least the lubricant for lubricating the mechanical members contained therein and aimed at transmitting motion.

2. A driving axle according to claim 1, **characterized in that** the at least one of said central and terminal portions (1, 2), which has a box-like leakproof structure containing at least the lubricant for lubricating the mechanical members contained therein and aimed at transmitting motion, consists of a central portion (1), which houses the central differential of the axle.

3. A driving axle according to claim 2, **characterized in that** said plurality of central and terminal portions (1,2) includes at least one terminal portion (2) and one central portion (1); with said terminal portion (2) that can be mechanically coupled and uncoupled, in coaxial relation by means of its outer flange (28), with a corresponding inner flange (18) provided at the side of the central portion (1).

4. A driving axle according to claim 3, **characterized in that** said terminal portion (2) includes at least one wheel (21), driven into rotation by an outer half-shaft (4) by means of a planetary gear or the like.

5. A driving axle according to claim 4, **characterized in that** said outer half-shaft (4) has an end geared for rotational mechanical connection to the corresponding end of an inner half-shaft (3) of said central portion (1); wherein said mechanical connection can be obtained by means of a sliding joint (10).

6. A driving axle according to claim 5, **characterized in that** the mechanical connection that can be obtained by means of the sliding joint (10) includes an outer half-joint (19), which slides freely in axial direction along an outer sleeve (11) and is provided with teeth, aimed at mating with corresponding teeth of an inner half-joint (29) provided integral with an inner end of the inner half-shaft (3); with springs (12) acting axially on the sleeve (11) to push and keep pushed the outer half-joint (19) against the inner half-joint (29), when the joint has been coupled.

7. A driving axle according to claim 6, **characterized in that** it includes an outer rotating hydraulic seal (7) which operates between the outer flange (28) of the terminal portion (2) and the outer sleeve (11) and an inner rotating hydraulic seal (8) which operates between the inner flange (18) of the central portion (1) and the inner half-joint (19), which is integral with the inner half-shaft (3).

8. A driving axle according to claim 7, **characterized in that** it includes a fixed sealing ring arranged to provide a hydraulic seal between a length of an inner duct (23) provided on the inner flange (18) of the central portion (1) and a corresponding length of an outer duct (13) provided on the outer flange (2); with said lengths of duct being aimed at forming a duct for feeding a wheel braking device associated to a single terminal portion (2).

9. A driving axle according to claim 8, **characterized in that** it includes a central portion (1), having two inner flanges (18) provided at both sides thereof, through which two end portions (2) can be mechanically coupled and uncoupled in coaxial relation, by means of their outer flanges (28), to the central portion (1).

## Patentansprüche

1. Eine Antriebsachse mit einer großen Gesamtlänge die auf selbstangetriebene Arbeitsmaschinen mittlerer Größe, wie große Gabelstapler und dergleichen, montiert werden soll, wobei die Maschine einen Umriss, dessen transversale Dimension bildet, die für den freien Durchgang auf öffentlichen Straßen erlaubte Dimension größer ist, und strukturell aus einer Vielzahl von Abschnitten besteht, von denen jeder die axiale Gesamtlänge kürzer als ein vorbestimmter Wert aufweist; **dadurch gekennzeichnet, dass** jeder der Zentralabschnitte (1) und Anschlussabschnitte (2), durch eine mechanische Verbindung mit inneren (18) und äußeren (28) Flanschen, mit dem benachbarten verbunden und von diesem getrennt werden kann und dass mindestens einer der Abschnitte eine kastenartige lecksichere Struktur hat, die mindestens das Schmiermittel zum Schmieren der mechanischen Bestandteilen, die darauf ab, Bewegung zu übertragen abzielten sind, enthält.

2. Eine Antriebsachse nach Anspruch 1, **dadurch gekennzeichnet, dass** der mindestens einen der Zentral- und Anschlussabschnitte (1, 2), der eine kastenartige lecksichere Struktur, die zumindest das Schmiermittel zum Schmieren der darin mechanischen Bestandteilen, die darauf ab, Bewegung zu übertragen abzielten sind, enthält, aus einem Zentralabschnitt (1) besteht, der das zentrale Differential der Achse beherbergt.

3. Eine Antriebsachse nach Anspruch 2, **dadurch gekennzeichnet, dass** die Mehrzahl von Zentral- und Anschlussabschnitten (1, 2) mindestens einen Anschlussabschnitt (2) und einen Zentralabschnitt (1) umfasst; wobei der Anschlussabschnitt (2) mittels seines äußeren Flansches (28) in koaxialer Beziehung mit einem entsprechenden inneren Flansch (18) mechanisch gekoppelt und entkoppelt werden kann, der an der Seite des Zentralabschnittes (1) vorgesehen ist.

4. Eine Antriebsachse nach Anspruch 3, **dadurch gekennzeichnet, dass** der Anschlussabschnitt (2) mindestens ein Rad (21) umfasst, das durch eine äußere Halbwelle (4) mittels eines Planetengetriebes oder dergleichen in Drehung versetzt wird.

5. Eine Antriebsachse nach Anspruch 4, **dadurch gekennzeichnet, dass** die äußere Halbwelle (4) ein Ende hat, das zur rotatorischen mechanischen Verbindung mit dem entsprechenden Ende einer inneren Halbwelle (3) des Zentralabschnittes (1) ausgerichtet ist; wobei die mechanische Verbindung kann durch ein Gleitgelenk (10) erhalten werden.

6. Eine Antriebsachse nach Anspruch 5, **dadurch gekennzeichnet, dass** die mechanische Verbindung, die man mit dem Gleitgelenk (10) erzielen kann, eine äußere Halbgelenk (19) umfasst, das frei in axialer Richtung entlang einer äußeren Hülse gleitet (11) und mit Zähnen versehen ist, die auf die Paarung mit entsprechenden Zähnen eines inneren Halbgelenks, das einstückig mit einem inneren Ende der inneren Halbwelle (3) vorgesehen ist, ausgerichtet (29) sind; wobei Federn (12) vorgesehen sind, die axial auf die Hülse (11) wirken, um das äußere Halbgelenk (19) gegen das innere Halbgelenk (29) zu drücken und gedrückt zu halten, wenn die Verbindung gekoppelt worden ist.

7. Eine Antriebsachse nach Anspruch 6, **dadurch gekennzeichnet, dass** sie eine äußere rotierende Hydraulikdichtung (7), die zwischen dem äußeren Flansch (28) des Anschlußabschnittes (2) und der äußeren Hülse (11) wirkt, und eine innere rotierende Hydraulikdichtung (8), die zwischen dem inneren Flansch (18) des Zentralabschnittes (1) und dem inneren mit der inneren Halbwelle (3) fest verbunden Halbgelenk (19) arbeitet, aufweist.

8. Eine Antriebsachse nach Anspruch 7, **dadurch gekennzeichnet, dass** es einen festen Dichtungsring, der um eine hydraulische Dichtung zwischen einer Länge eines an dem inneren Flansch (18) des Zentralabschnittes (1) vorgesehen inneren Schlauchs (23) bereitzustellen angeordnet ist, und einer entsprechenden Länge eines am äußeren Flansch (2) vorgesehen äußeren Schlauchs (13) enthält, wobei die Länge des Schlauchs darauf gerichtet, einen Schlauch zum Zuführen einer Radbremsvorrichtung zu bilden abzielt ist, die einem einzelnen Anschlussabschnitt (2) zugeordnet ist.

9. Eine Antriebsachse nach Anspruch 8, **dadurch gekennzeichnet, dass** es einen Zentralabschnitt (1), der zwei an seinen beiden Seiten vorgesehen innere Flansche (18) umfasst, durch die zwei Anschlussabschnitte (2) koaxial mit der Zentralabschnitte (1) mittels ihrer äußeren Flansche (28) koaxial gekoppelt und entkoppelt werden können, enthält.

## Revendications

1. Un essieu moteur du type ayant une grande longueur totale et destiné à être monté sur des machines automotrices de moyennes et grandes dimensions, comme de gros chariots élévateurs et similaires, qui définissent un contour dont la dimension transversale est plus grande que celle autorisée pour le libre passage sur les voies publiques, étant structurellement constituées d'une pluralité de parties dont chacune a la longueur axiale globale plus courte qu'une valeur préfixée; **caractérisé en ce que** chacune des parties centrales (1) et des parties terminales (2) peut être couplée et désaccouplée de/vers la partie adjacente par une liaison mécanique avec des brides interne (18) et extérieure (28) et **en ce que** au moins l'une des parties a une structure étanche en forme de boîte qui contient au moins le lubrifiant pour lubrifier les éléments mécaniques qui sont contenus dans la structure et visent à transmettre le mouvement.

2. Un essieu moteur selon la revendication 1, **caractérisé en ce que** au moins une desdites parties centrale et terminale (1, 2), qui a une structure étanche de type boîte contenant au moins le lubrifiant pour lubrifier les éléments mécaniques qui y sont contenus et visent à transmettre le mouvement, est constituée d'une partie centrale (1), qui abrite le différentiel central de l'essieu.

3. Un essieu moteur selon la revendication 2, **caractérisé en ce que** ladite pluralité de parties centrale et terminale (1, 2) comprend au moins une partie terminale (2) et une partie centrale (1); avec ladite partie terminale (2) qui peut être couplée mécaniquement et désaccouplée, en relation coaxiale au moyen de sa bride extérieure (28), avec une bride intérieure correspondante (18) qui est prévue sur le côté de la partie centrale (1).

4. Un essieu moteur selon la revendication 3, **caractérisé en ce que** ladite partie terminale (2) comprend au moins une roue (21), qui est entraînée en rotation par un demi-arbre externe (4) au moyen d'un engrenage planétaire ou similaire.

5. Un essieu moteur selon la revendication 4, **caractérisé en ce que** ledit demi-arbre externe (4) a une extrémité qui est prévue pour une liaison mécanique rotative à l'extrémité correspondante d'un demi-arbre interne (3) de ladite partie centrale (1); la liaison mécanique peut être obtenue au moyen d'un joint coulissant (10).

6. Un essieu moteur selon la revendication 5, **caractérisé en ce que** la liaison mécanique qui peut être obtenue au moyen du joint coulissant (10) comprend un demi-joint externe (19), qui coulisse librement dans la direction axiale le long d'un manchon externe (11) et est muni de dents, destinées à s'accoupler avec les dents correspondantes d'une demi-joint interne (29) qui est prévu solidaire d'une extrémité interne du demi-arbre interne (3); avec des ressorts (12) agissant axialement sur le manchon (11) pour pousser et maintenir poussé le demi-joint externe (19) contre le demi-joint interne (29), lorsque le joint a été accouplé.

7. Un essieu moteur selon la revendication 6, **caractérisé en ce que** il comprend un joint hydraulique tournant extérieur (7) qui opère entre la bride extérieure (28) de la partie terminale (2) et le manchon extérieur (11) qui agit entre la bride intérieure (18) de la partie centrale (1) et la demi-articulation interne (19), qui est solidaire du demi-arbre interne (3).

8. Un essieu moteur selon la revendication 7, **caractérisé en ce qu'**il comprend un anneau d'étanchéité fixé qui est agencé pour fournir un joint hydraulique entre une longueur d'un conduit interne (23), qui est prévu sur la bride intérieure (18) de la partie centrale (1), et une longueur correspondante d'un conduit externe (13), qui est prévu sur la bride extérieure (2); avec les longueurs de conduit visant à former un conduit pour alimenter un dispositif de freinage de roue associé à une seule partie terminale (2).

9. Un essieu moteur selon la revendication 8, **caractérisé en ce qu'**il comprend une partie centrale (1), ayant deux rebords intérieurs (18) prévus de chaque côté de celle-ci, au moyen desquelles deux parties d'extrémité (2) peuvent être couplées et découplées mécaniquement en relation coaxiale, à la partie centrale (1) par l'intermédiaire de leurs brides externes (28).
